# FASCICULE DE BREVET EUROPEEN

(11) **EP 0 382 666 B1**
(45) Date de publication et mention de la délivrance du brevet: **12.05.1993**
(21) Numéro de dépôt: 90440010.8
(22) Date de dépôt: 07.02.1990
(51) Int. Cl.: A01D 34/66, A01B 61/04

(54) **Faucheuse avec dispositif de sécurité à déclenchement**
Mähmaschine mit selbstauslösender Sicherheitsvorrichtung
Mower with release safety device

(30) Priorité: 07.02.1989 FR 8901722
(43) Date de publication de la demande: 16.08.1990
(73) Titulaire: KUHN S.A., F-67700 Saverne (FR)
(72) Inventeur: Neuerburg, Horst, F-67700 Saverne (FR); Kieffer, Fernand, F-67700 Saverne (FR)

(56) Documents cités:
- EP-A- 0 060 605
- EP-A- 0 116 661
- EP-A- 0 297 012
- DE-A- 1 782 238
- DE-A- 3 431 327
- DE-A- 3 507 475
- DE-C- 3 233 560
- FR-A- 1 472 321
- FR-A- 2 587 167
- GB-A- 2 052 237

## Description

La présente invention concerne une faucheuse comportant un premier châssis par l'intermédiaire duquel elle est attelée à un tracteur, un deuxième châssis supportant les organes de travail et lié au premier châssis au moyen de bielles constituant un quadrilatère déformable notamment dans une direction dirigée vers le haut pour permettre au deuxième châssis et aux organes de travail qu'il supporte de s'adapter au relief du sol, un premier carter destiné à fournir aux organes de travail le mouvement reçu d'une source motrice au moyen d'un premier arbre de transmission télescopique à joints universels et un deuxième carter fixé sur le deuxième châssis et destiné à transmettre aux organes de travail le mouvement reçu du premier carter au moyen d'un deuxième arbre de transmission s'étendant, en vue de dessus, dans une direction transversale à la direction de travail.

Une telle faucheuse est décrite dans la FR -A - 2.458.981. Cette faucheuse connue comporte un premier châssis qui est formé par un cadre de forme sensiblement rectangulaire, disposé verticalement et perpendiculairement à la direction de travail. Sur ce cadre est fixé un dispositif d'attelage destiné à être attelé à l'attelage frontal d'un tracteur. A chacune des extrémités latérales du cadre de ce premier châssis sont prévus des goussets à chacun desquels sont liées, au moyen d'articulations d'axes s'étendant horizontalement et perpendiculairement à la direction de travail, deux bielles s'étendant vers l'arrière et vers le bas. A son extrémité arrière, chaque bielle est liée, au moyen d'une articulation d'axe également horizontal et perpendiculaire à la direction de travail à un deuxième châssis supportant des organes de coupe réalisés sous forme de disques rotatifs pourvus de couteaux. Ces bielles forment un parallélogramme déformable dans une direction dirigée vers le haut. Le deuxième châssis comporte un cadre en forme de U ouvert vers l'arrière et s'étendant dans un plan sensiblement horizontal. A la partie arrière de chaque branche du U, le cadre est lié à un bras s'étendant vers le bas et muni à son extrémité inférieure d'une patte dirigée vers l'avant dans la direction de travail. A leur extrémité avant, ces pattes sont liées à un carter s'étendant perpendiculairement à la direction de travail et au-dessus duquel tournent lesdits disques qui y sont guidés en rotation. Le cadre du premier châssis supporte également un premier carter entraîné par un premier arbre de transmission télescopique à joints universels lié à la prise de force du tracteur. Ce premier carter entraîne, au moyen d'un arbre télescopique à joints universels, un deuxième carter fixé au cadre du deuxième châssis et destiné à transmettre le mouvement aux disques.

Grâce aux bielles qui lient le deuxième châssis au premier châssis et qui forment au moins sensiblement un parallélogramme déformable dans une direction dirigée vers le haut, le deuxième châssis et les organes de coupe qu'il supporte, peuvent bien s'adapter à la configuration du sol sur lequel doit travailler la faucheuse. Comme en sus, ces bielles constituent au moins sensiblement un parallélogramme tiré, le deuxième châssis glisse plus facilement sur le sol.

Bien que le deuxième châssis puisse théoriquement passer aisément par-dessus des bosses et des obstacles, il s'est avéré en pratique que des déformations, voire des ruptures peuvent apparaître, notamment au niveau des endroits du deuxième châssis où sont liées les bielles supérieures du parallélogramme déformable, lorsque ledit deuxième châssis et/ou les organes de coupe accrochent un obstacle sérieux. Ces problèmes de ruptures et de déformations résultent notamment du fait que les points de liaison des bielles du parallélogramme déformable au deuxième châssis s'étendent à une distance relativement importante du sol. Ainsi, lorsque les organes de coupe et/ou la partie inférieure du deuxième châssis accrochent un obstacle, la force engendrée agit avec un bras de levier relativement important.

Dans la EP - A - 0.277.343 est décrite une faucheuse qui est destinée à être attelée à l'arrière d'un tracteur. Cette faucheuse connue comporte un premier châssis qui est muni de deux roues par l'intermédiaire desquelles il repose sur le sol, et d'un timon d'attelage par l'intermédiaire duquel la faucheuse est attelée au tracteur. Cette faucheuse connue comporte par ailleurs un deuxième châssis qui supporte des organes de coupe réalisés sous forme de tambours rotatifs munis de couteaux. Ce deuxième châssis est lié au premier châssis au moyen de deux paires de bielles formant un parallélogramme déformable dans une direction dirigée vers le haut. Ces bielles sont liées à leur extrémité arrière au deuxième châssis et à leur extrémité avant au premier châssis. Cette faucheuse connue comporte notamment encore un premier carter fixé sur le deuxième châssis dans la partie médiane de celui-ci et un deuxième carter également fixé sur le deuxième châssis à un endroit décalé transversalement par rapport au premier carter et recevant le mouvement fourni par le premier carter au moyen de courroies tournant dans un plan horizontal.

Dans cette faucheuse connue, les points de liaison des bielles du parallélogramme déformable au deuxième châssis s'étendent également à une distance relativement importante du sol. De cette sorte, cette faucheuse connue devrait être soumise aux mêmes problèmes que ceux évoqués ci-avant, étant donné que la force engendrée lorsque les tambours rotatifs accrochent un obstacle agit, également avec un très grand bras de levier.

Dans la DE - A - 1.782.238 est décrite une faucheuse qui comporte un châssis par l'intermédiaire duquel la faucheuse est attelée à un tracteur. Cette faucheuse connue comporte par ailleurs des organes de coupe réalisés sous forme de tambours rotatifs munis à leur périphérie inférieure de couteaux. Chaque organe de coupe est lié au châssis au moyen de bielles formant un parallélogramme déformable dans une direction dirigée vers le haut. Au sommet de chaque tambour rotatif est agencé un couple conique servant à l'entraînement en rotation du tambour. La roue meneuse de chaque couple conique est liée en rotation à un arbre respectif dont l'axe de rotation s'étend horizontalement et perpendiculairement à la direction de travail. Ces divers arbres sont liés en rotation entre eux au moyen d'arbres télescopiques à joints universels. Les axes des articulations par l'intermédiaire desquelles les bielles inférieures sont liées à leur organe de coupe correspondant sont confondus avec l'axe de rotation de l'arbre respectif. La bielle supérieure, quant à elle, est munie d'un dispositif de sécurité à déclenchement qui, au cas où le tambour accroche un obstacle, autorise le raccourcissement de ladite bielle supérieure et permet au tambour de pivoter vers l'arrière autour des axes des articulations des bielles inférieures. Dans cette faucheuse connue, il n'est pas prévu de carter destiné à fournir aux organes de coupe le mouvement reçu de la prise de force du tracteur. Du reste, il s'est avéré en pratique, qu'il n'était pas souhaitable d'intégrer le dispositif de sécurité dans les bielles du parallélogramme. En sus, il apparaît que les divers organes de coupe ne peuvent avoir entre eux qu'un débattement relatif minime. Ceci résulte du fait que l'arbre à joints universels, prévu entre deux organes de coupe, a forcément une longueur relativement faible, de sorte que les angles que peuvent prendre les joints universels, dépassent très rapidement les angles limites admissibles.

La présente invention a pour objectif d'équiper une faucheuse, telle que celle décrite dans l'introduction, d'un mécanisme de sécurité sans affaiblir les bielles qui lient le deuxième châssis au premier châssis et sans risque pour les organes d'entraînement des organes de travail, tout en garantissant une adaptation optimale au relief du sol.

A cet effet, une première faucheuse selon la présente idée inventive, dont le deuxième arbre de transmission s'étendant, en vue de dessus, dans une direction transversale à la direction de travail et liant le premier carter au deuxième carter est un arbre de transmission télescopique à joints universels, est caractérisée par le fait que le deuxième châssis se compose d'une première structure supportant les organes de travail et sur laquelle est fixé le deuxième carter et d'une deuxième structure à laquelle sont liées les bielles liant le deuxième châssis au premier châssis et sur laquelle est fixé le premier carter, ladite première structure étant liée à ladite deuxième structure au moyen d'une articulation d'axe géométrique dirigé au moins sensiblement horizontalement et au moins sensiblement perpendiculairement à la direction de travail, un dispositif de sécurité à déclenchement empêchant, en travail normal, le pivotement de la première structure par rapport à la deuxième structure autour de l'axe géométrique de ladite articulation et permettant, lorsque la première structure et/ou les organes de travail accrochent un obstacle, le pivotement de ladite première structure et des organes de travail par rapport à la deuxième structure, vers l'arrière, compte tenu du sens de travail, et que ladite direction transversale du deuxième arbre de transmission télescopique à joints universelle est telle que dans la zone de pivotement autorisée par le dispositif de sécurité à déclenchement, les angles des joints universels ne dépassent pas les angles limites admissibles.

Une deuxième faucheuse selon la présente idée inventive est caractérisée par le fait que le deuxième châssis se compose d'une première structure supportant les organes de travail et sur laquelle est fixé le deuxième carter, et d'une deuxième structure à laquelle sont liées les bielles liant le deuxième châssis au premier châssis, et sur laquelle est fixé le premier carter, ladite première structure étant liée à ladite deuxième structure au moyen d'une articulation d'axe géométrique dirigé au moins sensiblement horizontalement et au moins sensiblement perpendiculairement à la direction de travail, un dispositif de sécurité à déclenchement empêchant, en travail normal, le pivotement de la première structure par rapport à la deuxième structure autour de l'axe géométrique de ladite articulation et permettant, lorsque la première structure et/ou les organes de travail accrochent un obstacle, le pivotement de ladite première structure et des organes de travail par rapport à la deuxième structure, vers l'arrière, compte tenu du sens de travail, et que l'axe de rotation du deuxième arbre de transmission soit confondu avec l'axe géométrique de l'articulation liant la première et la deuxième structure du deuxième châssis.

Grâce à ces caractéristiques, les faucheuses selon la présente idée inventive ne sont plus sujettes aux déformations et aux ruptures qui apparaissent sur les faucheuses de l'art antérieur. Ceci résulte du fait que le dispositif de sécurité à déclenchement limite la valeur de l'effort qui est à absorber par les endroits du deuxième châssis où sont liées la ou les bielles supérieures du quadrilatère déformable.

Compte tenu du fait qu'en travail normal la position du premier carter ne varie pas par rapport au deuxième carter, le deuxième châssis et les organes de travail qu'il supporte peuvent avoir un très grand débattement, c'est-à-dire une très bonne capacité d'adaptation au relief du sol sans qu'il n'apparaisse de contraintes supplémentaires dans le deuxième arbre de transmission liant le premier et le deuxième carter. Seul le premier arbre de transmission téléscopique à joints universels qui lie la source motrice (généralement l'arbre de prise de force du tracteur) à l'arbre d'entrée du premier carter subit une variation de longueur et une variation des angles des joints universels. Comme cependant cet arbre peut avoir une longueur relativement importante, ces variations restent relativement limitées, de sorte que les contraintes engendrées dans cet arbre par l'adaptation du deuxième châssis et des organes de travail qu'il supporte, au relief du sol, restent bien inférieures aux valeurs limites admissibles.

C'est seulement lorsque le dispositif de sécurité déclenche, qu'il se produit un déplacement relatif entre le premier carter et le deuxième carter. Comme il est cependant prévu dans la première faucheuse que la direction du deuxième arbre de transmission télescopique à joints universels qui lie le premier carter et le deuxième carter est telle que dans la zone de pivotement autorisée par le dispositif de sécurité à déclenchement, les angles des joints universels ne dépassent pas les angles limites admissibles, il ne se produit aucune rupture de cet arbre de transmission. Dans la deuxième faucheuse, il est prévu que l'axe de rotation du deuxième arbre de transmission soit confondu avec l'axe géométrique de l'articulation autour duquel pivotent la première structure du second châssis conjointement avec les organes de travail et le deuxième carter. De cette sorte, il ne peut pas non plus se produire de rupture de cet arbre de transmission.

Il convient du reste de faire remarquer que pendant ce pivotement, la deuxième structure du deuxième châssis et le premier carter ne bougent pas. De cette sorte, le premier carter conserve sa position par rapport à la source motrice. Une rupture du premier arbre de transmission télescopique à joints universels est donc également exclue. Les bielles enfin sont formées d'une seule pièce, de sorte qu'elles possèdent une bonne rigidité.

Selon une caractéristique supplémentaire de l'invention, il est prévu dans la première faucheuse qu'en vue suivant l'axe géométrique de l'articulation liant la première structure et la deuxième structure du deuxième châssis, l'axe de rotation de l'arbre d'entrée du deuxième carter s'approche de l'axe de rotation de l'arbre de sortie du premier carter lors du pivotement de la première structure par rapport à la deuxième structure. Dans ce cas, les angles des joints universels du deuxième arbre de transmission diminuent au cours du pivotement.

Une construction particulièrement avantageuse est obtenue lorsqu'en vue suivant l'axe géométrique de l'articulation liant la première structure et la deuxième structure du deuxième châssis, la distance de l'axe de rotation de l'arbre de sortie du premier carter à l'axe géométrique de ladite articulation est au moins sensiblement égale à la distance de l'axe de rotation de l'arbre d'entrée du deuxième carter à l'axe géométrique de ladite articulation.

Du reste, il est particulièrement avantageux que l'axe de rotation de l'arbre de sortie du premier carter et l'axe de rotation de l'arbre d'entrée du deuxième carter soient au moins sensiblement parallèles.

Il est même préférable que des axes de rotation soient au moins sensiblement parallèles à l'axe géométrique de l'articulation liant la première structure et la deuxième structure du deuxième châssis.

Il est aussi préférable qu'en vue suivant l'axe géométrique de l'articulation liant la première structure et la deuxième structure du deuxième châssis, l'axe de rotation de l'arbre d'entrée du deuxième carter s'étende dans le voisinage de l'axe géométrique de ladite articulation. Le pivotement de la première structure et des organes de travail par rapport à la deuxième structure peut donc être relativement important, alors que le déplacement de l'arbre d'entrée du deuxième carter reste relativement limité, voire nul.

Selon une caractéristique supplémentaire de l'invention, il est prévu que le quadrilatère déformable soit au moins sensiblement un parallélogramme déformable.

Selon quelques autres caractéristiques supplémentaires de l'invention, il est prévu que le premier carter s'étende dans la partie médiane de la faucheuse vue suivant la direction de travail, que le deuxième carter s'étende dans le voisinage de l'une des extrémités du deuxième châssis et que le dispositif de sécurité à déclenchement s'étende à la partie frontale du deuxième châssis.

Ce dispositif de sécurité à déclenchement comporte, selon une réalisation :
- deux axes s'étendant vers l'avant au moins sensiblement parallèlement à la direction de travail, l'un desdits axes étant lié à la première structure et l'autre desdits axes étant lié à la deuxième structure, les deux axes s'étendant l'un au-dessus de l'autre ;
- deux brides comportant chacune un logement entourant partiellement chacun des deux axes, de telle sorte que les deux axes s'étendent entre lesdites brides ; et
- un dispositif élastique serrant les deux brides sur les deux axes.

Ce dispositif élastique s'étend, selon une réalisation, entre les deux axes et de préférence plus près de l'un des axes que de l'autre axe. Grâce à cette dernière caractéristique, les deux brides du dispositif de sécurité à déclenchement restent, lors du déclenchement, lié à l'axe s'étendant le plus près du dispositif élastique. En sus, afin de faciliter la manoeuvre de réenclenchement du dispositif de sécurité à déclenchement, il est prévu que les brides soient prolongées au-delà de l'axe le plus éloigné du dispositif élastique d'une distance telle qu'en fin de la zone de pivotement autorisée, ledit axe s'étende toujours entre les deux brides. Il suffira, dans ce cas, de simplement reculer avec la faucheuse pour que la première structure et les organes de travail qu'elle supporte pivotent vers l'avant autour de l'axe géométrique de l'articulation liant la première structure à la deuxième structure, jusqu'à ce que ledit axe s'étende à nouveau dans les deux logements correspondants.

Selon une réalisation particulièrement avantageuse, il est prévu que l'axe géométrique de l'articulation liant la première structure et la deuxième structure du deuxième châssis s'étende sensiblement à la verticale de la partie frontale des organes de travail. Dans ce cas, la première structure et les organes de travail qu'elle supporte ne s'enfoncent pas dans le sol lors du pivotement vers l'arrière autour de l'axe géométrique de ladite articulation.

Selon une autre réalisation particulièrement avantageuse, il est prévu que l'axe géométrique de l'articulation liant la première structure et la deuxième structure du deuxième châssis soit confondu avec l'axe géométrique de l'articulation liant soit la ou les bielles supérieures, soit la ou les bielles inférieures du quadrilatère déformable au deuxième châssis. Préférentiellement, l'axe géométrique de l'articulation liant la première structure et la deuxième structure du deuxième châssis est confondu avec l'axe géométrique de l'articulation liant la ou les bielles inférieures au deuxième châssis.

Pour que le deuxième châssis puisse aisément glisser sur la surface du sol, il s'avère avantageux que les bielles du quadrilatère déformable soient liées à leur extrémité frontale au premier châssis d'où elles s'étendent vers l'arrière, compte tenu du sens de travail, et vers le bas.

Bien que la présente invention puisse être utilisée sur une faucheuse attelée à l'attelage arrière d'un tracteur, elle s'avère particulièrement intéressante pour une faucheuse destinée à être attelée à l'attelage frontal d'un tracteur.

D'autres caractéristiques de la présente invention sont contenues dans les autres sous-revendications et apparaîtront dans la description suivante de deux exemples de réalisation nullement limitatifs, faite à la lumière du dessin annexé sur lequel :
- la figure 1 représente une vue de dessus d'une première faucheuse conforme à la présente invention ;
- la figure 2 représente une vue latérale de la faucheuse selon la figure 1, coupée partiellement suivant le plan II-II défini sur la figure 1 ;
- la figure 3 représente une vue partielle de l'arrière de la faucheuse représentée sur les figures 1 et 2 ;
- la figure 4 représente une vue similaire à celle de la figure 2, dans laquelle la première structure du deuxième châssis et les organes de travail qu'elle supporte sont en position déclenchée ;
- la figure 5 représente une vue en coupe suivant le plan V-V défini sur la figure 6 du dispositif de sécurité à déclenchement ;
- la figure 6 représente une vue latérale dudit dispositif de sécurité à déclenchement ;
- la figure 7 représente une vue de l'arrière schématique et partielle d'une deuxième faucheuse conforme à la présente invention ; et
- la figure 8 représente une vue latérale de la faucheuse de la figure 7.

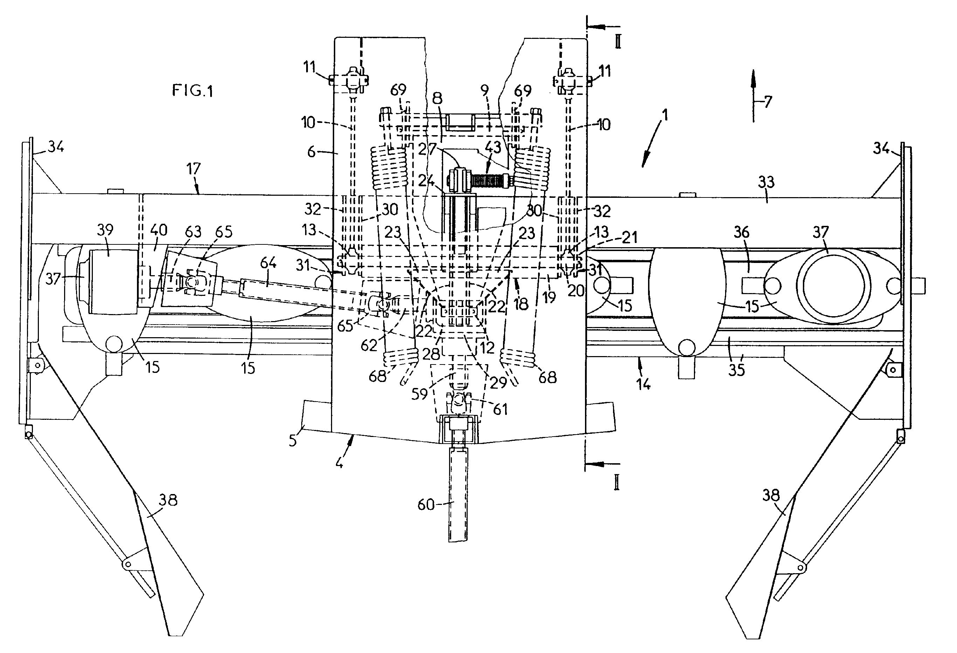

La faucheuse (1) représentée sur les figures 1 à 4 est destinée à être attelée à l'attelage frontal (2) d'un tracteur (3).

Elle comporte tout d'abord un premier châssis (4) qui est muni d'un dispositif d'attelage (5), par l'intermédiaire duquel elle est attelée audit attelage (2). Le premier châssis (4) est également muni d'un caisson (6) qui s'étend vers l'avant, compte tenu du sens de travail défini par la flèche (7).

A la partie frontale du caisson (6) sont liées une bielle supérieure (8) au moyen d'une articulation (9) et deux bielles inférieures (10) au moyen d'une articulation (11) respective. L'articulation (9), par l'intermédiaire de laquelle la bielle supérieure (8) est liée au caisson (6) du premier châssis (4), est une articulation cylindrique dont l'axe géométrique s'étend au moins sensiblement horizontalement et au moins sensiblement perpendiculairement à la direction de travail définie par la flèche (7). Les articulations (11) par contre, par l'intermédiaire desquelles les bielles inférieures (10) sont liées au caisson (6) du premier châssis (4), sont avantageusement des articulations sphériques.

Lesdites bielles (8, 10) s'étendent à partir du premier châssis (4), vers l'arrière, compte tenu du sens de travail défini par la flèche (7), et vers le bas. A leur extrémité arrière respective, elles sont liées au moyen d'articulations (12), respectivement (13), à un deuxième châssis (14) qui supporte les organes de travail (15). Ces articulations (12, 13) sont également avantageusement des articulations sphériques.

Les articulations (9, 11, 12, 13) sont disposées de telle manière que les bielles (8, 10) forment au moins sensiblement un parallélogramme déformable dans une direction dirigée vers le haut. Grâce à cette liaison, le deuxième châssis (14) et les organes de travail (15) qu'il supporte peuvent suivre de manière optimale le relief du sol (16) sur lequel est amené à glisser le deuxième châssis (14) pendant le travail. En effet, le parallélogramme déformable formé par les bielles (8, 10) permet au deuxième châssis (14) et aux organes de travail (15) qu'il supporte, de monter et de descendre. Il convient d'ailleurs de noter que le franchissement des bosses et creux est facilité par le fait que ledit parallélogramme est tiré au travail. Les articulations sphériques (11, 12, 13) confèrent ensuite au deuxième châssis (14) et aux organes de travail(15) qu'il supporte, une certaine mobilité autour d'un axe géométrique s'étendant au moins sensiblement parallèlement à la direction de travail définie par la flèche (7). L'articulation cylindrique (9), enfin, est destinée à absorber les efforts latéraux lors du travail en courbe. De ce fait, on évite que le deuxième châssis (14) et les organes de travail (15) qu'il supporte, se déplacent latéralement par rapport au premier châssis (4) lorsque le tracteur (3) négocie une courbe.

Le deuxième châssis (14) qui supporte les organes de travail (15), se compose, selon l'invention, de deux structures, une première structure (17) supportant les organes de travail (15) et une deuxième structure (18) à laquelle sont liées les bielles (8, 10).

La deuxième structure (18) comporte un manchon (19) qui s'étend au moins sensiblement horizontalement et au moins sensiblement perpendiculairement à la direction de travail définie par la flèche (7) et qui sert de palier à un axe (20) définissant une articulation (21) d'axe géométrique dirigé au moins sensiblement horizontalement et au moins sensiblement perpendiculairement à ladite direction de travail. La deuxième structure (18) comporte par ailleurs deux plaques (22) parallèles, s'étendant au moins sensiblement verticalement et entre les extrémités supérieures desquelles s'étend l'extrémité arrière de la bielle supérieure (8) qui y est liée au moyen de l'articulation (12). Les deux plaques (22) sont liées rigidement au manchon (19) et sont chacune rigidifiée au moyen d'un gousset (23). A leur partie frontale, les deux plaques (22) sont liées rigidement entre elles au moyen d'une cornière (24) s'étendant perpendiculairement à la direction de travail et dont l'une (25) des ailes s'étend horizontalement et l'autre (26) verticalement. La deuxième structure (18) comporte aussi un axe (27) s'étendant au moins sensiblement parallèlement à la direction de travail. Cet axe (27) est fixé à son extrémité arrière sur le manchon (19) et traverse l'aile verticale (26) de la cornière (24) sur laquelle il est fixé de telle sorte que l'extrémité avant dudit axe (27) s'étende vers l'avant au-delà de ladite aile verticale (26). La deuxième structure (18) comporte enfin encore une plaque de fixation (28) horizontale et s'étendant, compte tenu du sens de travail, derrière le manchon (19). Cette plaque de fixation (28) est liée rigidement audit manchon (19), ainsi qu'aux plaques (22). Elle sert à fixer sur la deuxième structure (18) un premier carter (29) dont la fonction sera décrite plus loin.

Comme dit ci-avant, le manchon (19) sert de palier à l'axe (20). Sur la figure 1, on voit très précisément que les deux extrémités de cet axe (20) sortent du manchon (19). Chacune de ces extrémités traverse respectivement la première aile (30) d'une chape (31), l'extrémité arrière d'une bielle inférieure (10) et la deuxième aile (32) de ladite chape (31) laquelle est fixée sur la première structure (17) du deuxième châssis (14). De cette sorte, la première structure (17) est donc liée à la deuxième structure (18) au moyen de l'articulation (21) formée par les deux chapes (31) et l'axe (20). Les extrémités de cet axe (20) font en sus partie de l'articulation (13) au moyen de laquelle les bielles inférieures (10) sont liées à la deuxième structure (18) du deuxième châssis (14).

La première structure (17) du deuxième châssis (14) qui supporte les organes de travail (15), est formée par les éléments suivants. Une traverse tubulaire (33) sur laquelle sont fixées les deux chapes (31) décrites ci-avant, s'étend au moins sensiblement horizontalement et au moins sensiblement perpendiculairement à la direction de travail. A chaque extrémité, la traverse tubulaire (33) est liée à la partie supérieure d'une tôle latérale (34) s'étendant dans un plan au moins sensiblement vertical et au moins sensiblement parallèle à la direction de travail. A sa partie inférieure, chacune des tôles latérales (34) est fixée à l'extrémité correspondante d'un raidisseur (35) qui porte une poutre (36). Cette poutre (36) supporte les organes de travail (15) réalisés ici sous forme de disques rotatifs qui s'étendent audessus de ladite poutre (36). Ces disques sont, d'une manière connue de l'homme de l'art, guidés en rotation dans la poutre (36) et entraînés en rotation par des éléments d'entraînement (non représentés) logés dans ladite poutre (36). Chaque disque d'extrémité est en sus surmonté par un tambour rotatif (37) qui collabore avec un dispositif d'andainage fixe (38) correspondant fixé sur la tôle latérale (34) correspondante, en vue de réduire la largeur de l'andain de produit coupé par les disques, qui est déposé derrière la faucheuse.

Au-dessus de l'un des tambours rotatifs (37) est prévu un deuxième carter (39) qui est fixé à la traverse tubulaire (33) au moyen d'un organe de fixation (40). Ce deuxième carter (39) est un carter de renvoi connu de l'homme de l'art, dont l'arbre de sortie (non représenté) s'étend au moins sensiblement verticalement à travers le tambour rotatif (37) situé sous ledit deuxième carter (39), en vue de transmettre le mouvement aux organes de travail (15) via les éléments d'entraînement logés dans la poutre (36).

La transmission du mouvement depuis la source motrice (41), constituée par la prise de force frontale du tracteur (3), jusqu'aux organes de travail (15) sera expliquée ultérieurement.

Sous la traverse tubulaire (33), sensiblement à la verticale en-dessous de l'axe (27) fixé à la deuxième structure (18), est fixé un axe (42) s'étendant également au moins sensiblement parallèlement à la direction de travail.

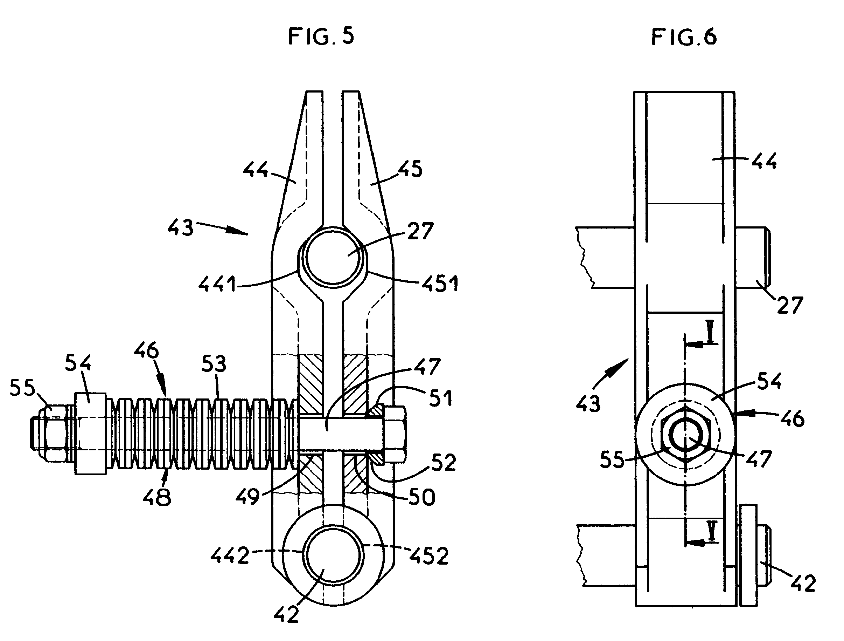

L'axe supérieur (27), fixé sur la deuxième structure (18) et l'axe inférieur (42), fixé sur la première structure (17) font partie d'un dispositif de sécurité à déclenchement (43). Celui-ci s'étend, vu suivant la direction de travail, dans la partie médiane de la faucheuse (1) et dans la partie frontale du deuxième châssis (14). Ledit dispositif de sécurité à déclenchement (43) apparaît plus en détail sur les figures 5 et 6. Outre les deux axes (27, 42), le dispositif de sécurité à déclenchement (43) comporte encore, d'une part, deux brides (44, 45) qui présente chacune un logement (441, 442, 451, 452) entourant sur sensiblement 180° chacun des deux axes (27, 42), lesquels s'étendent entre les deux brides (44, 45), et, d'autre part, un dispositif élastique (46) serrant les deux brides (44, 45) sur les deux axes (27, 42). A cet effet, les logements (441, 442, 451, 452) présentent une forme adaptée pour collaborer avec la forme des axes (27, 42). Ledit dispositif élastique (46) s'étend entre les deux axes (27, 42) en étant plus près de l'axe inférieur (42) que de l'axe supérieur (27). Il se compose d'une tige (47) qui s'étend au moins sensiblement perpendiculairement au plan contenant les deux axes (27, 42) et d'un organe élastique (48). L'une des extrémités de la tige (47) traverse les deux brides (44, 45) qui comportent à cet effet, des trous (49, 50) d'un diamètre quelque peu plus grand que le diamètre de ladite tige (47). A son extrémité s'étendant en-dehors de la bride (45), ladite tige (47) est liée à une pièce de liaison (51) présentant une surface arrondie convexe (52) qui est en contact avec la bride (45). A son autre extrémité s'étendant en-dehors de l'autre bride (44), la tige (47) est munie d'un empilage de rondelles élastiques (53) constituant l'organe élastique (48) et qui sont serrées entre ladite bride (44) et une rondelle (54) maintenue par un écrou (55) vissé sur ladite extrémité de la tige (47) qui est, à cet effet, filetée.

Le dispositif de sécurité à déclenchement (43) qui vient d'être décrit, empêche, en travail normal, le pivotement de la première structure (17) par rapport à la deuxième structure (18) vers l'arrière autour de l'articulation (21) constituée par l'axe (20) et les chapes (31).

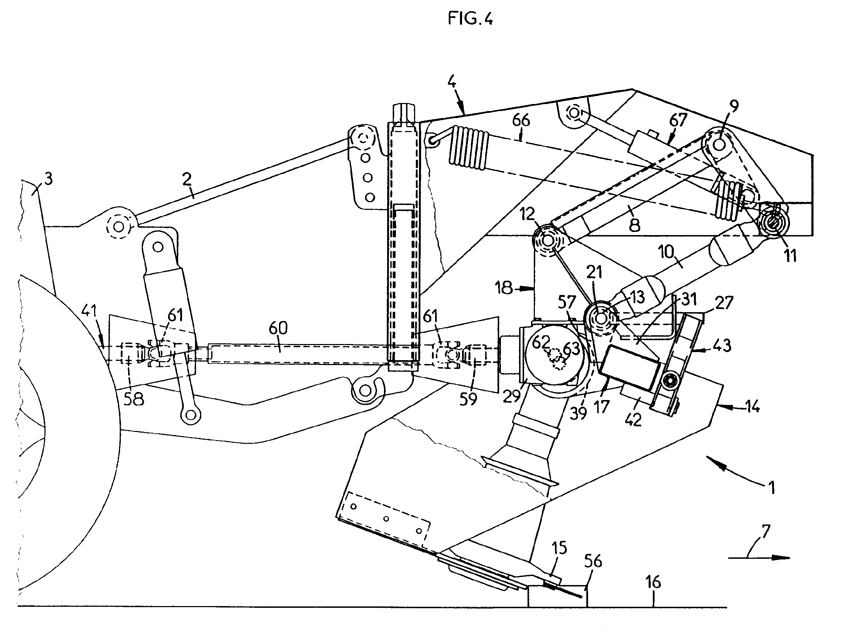

Lorsque la première structure (17) et/ou les organes de travail (15) accrochent un obstacle sérieux (56) (voir figure 4), et compte tenu du fait que le tracteur (3) avance, il se produit alors un effort qui tend à écarter les deux axes (27, 42) l'un de l'autre. Ce faisant, l'axe (27) qui est plus éloigné du dispositif élastique (46) que l'axe (42), écarte les deux brides (44, 45) l'une de l'autre, en comprimant les rondelles élastiques (53), jusqu'à ce qu'il puisse s'échapper des logements (441, 451). Ceci permet alors à la première structure (17) et aux organes de travail (15) qu'elle supporte de pivoter vers l'arrière par rapport à la deuxième structure (18).

Du reste, comme il est prévu que l'articulation (21) liant la première structure (17) à la deuxième structure (18) s'étend au moins sensiblement à la verticale de la partie frontale des organes de travail (15), ceux-ci ne risquent pas de s'enfoncer dans le sol (16) lors du pivotement.

Entre la première structure (17) et la deuxième structure (18) est prévu un organe de limitation (57) qui limite le pivotement possible entre ladite première structure (17) et ladite deuxième structure (18) lorsque le dispositif de sécurité (43) a déclenché (figure 4).

Il est également prévu que chaque bride (44, 45) soit prolongée vers le haut au-delà de l'axe supérieur (27) d'une distance telle que, lorsque l'organe de limitation (57) stoppe le pivotement de la première structure (17) par rapport à la deuxième structure (18), l'axe (27) s'étende toujours entre les deux brides (44, 45) (figure 4). De cette sorte, le réenclenchement du dispositif de sécurité (43) sera très facile. Il suffira en effet simplement de reculer avec le tracteur (3) jusqu'à ce que l'axe (27) s'étende à nouveau entre les deux logements (441, 451) correspondants.

Il convient encore de noter que la force de déclenchement peut être réglée grâce à l'écrou (55) qui sera vissé plus ou moins loin sur la tige (47) de sorte à comprimer plus ou moins fortement les rondelles élastiques (53).

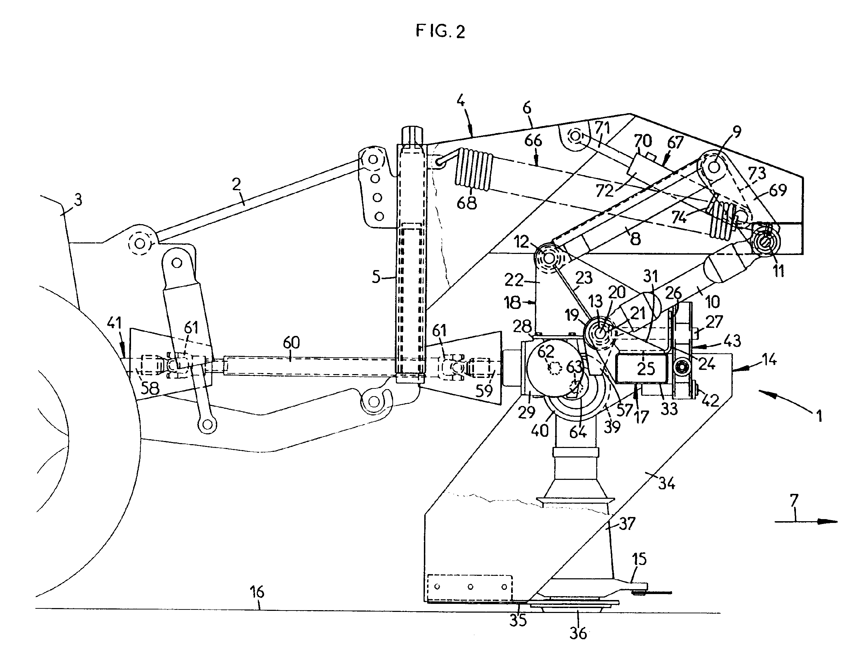

Comme dit plus haut, les organes de travail (15) reçoivent le mouvement à partir d'une source motrice (41), constituée par la prise de force frontale du tracteur (3), qui comporte un arbre (58) dont l'axe de rotation est dirigé au moins sensiblement parallèlement à la direction de travail. Le premier carter (29) qui s'étend en vue suivant la direction de travail dans la partie médiane de la faucheuse (1), est muni, quant à lui, d'un arbre d'entrée (59) s'étendant vers l'arrière et dont l'axe de rotation est également au moins sensiblement parallèle à la direction de travail. Cet arbre d'entrée (59) du premier carter (29) reçoit le mouvement de l'arbre (58) de la prise de force du tracteur (3) via un premier arbre de transmission télescopique (60) à joints universels (61) dont l'axe longitudinal s'étend, en vue de dessus, au moins sensiblement suivant la direction de travail. Du reste, il apparaît sur la figure 2 qu'en position intermédiaire du débattement autorisé par le parallélogramme déformable, ledit premier arbre de transmission télescopique (60) s'étend également au moins sensiblement horizontalement.

Le premier carter (29) qui est un carter de renvoi est muni d'un arbre de sortie (62) dont l'axe de rotation s'étend au moins sensiblement horizontalement et au moins sensiblement perpendiculairement à la direction de travail. Cet arbre de sortie (62) du premier carter (29) est dirigé vers le deuxième carter (39) qui comporte un arbre d'entrée (63) dont l'axe de rotation s'étend également au moins sensiblement horizontalement et au moins sensiblement perpendiculairement à la direction de travail. De cette sorte, l'arbre de sortie (62) du premier carter (29) et l'arbre d'entrée (63) du deuxième carter (39) sont au moins sensiblement parallèles entre eux.

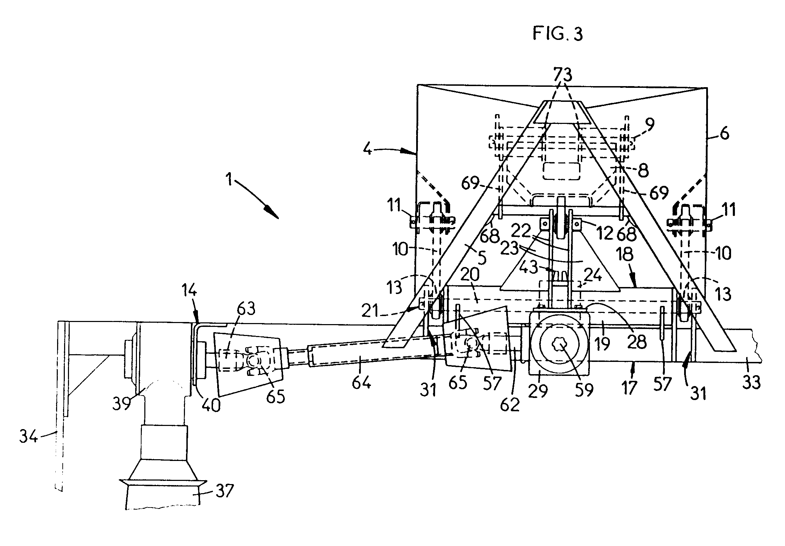

L'arbre d'entrée (63) du deuxième carter (39) qui est dirigé vers le premier carter (29), reçoit le mouvement de l'arbre de sortie (62) dudit premier carter (29), via un deuxième arbre de transmission téléscopique (64) à joints universels (65). L'axe longitudinal de cet arbre de transmission télescopique (64) s'étend, en vue de dessus, dans une direction transversale à la direction de travail. Du reste, il apparaît sur les figures 2 et 3 que l'arbre de transmission télescopique (64) s'étend également quelque peu vers le bas étant donné que l'arbre d'entrée (63) du deuxième carter (39) est situé quelque peu plus bas que l'arbre de sortie (62) du premier carter (29). La direction de cet arbre de transmission télescopique (64) est telle que les angles des joints universels (65) soient relativement faibles. Il convient d'ailleurs de noter que ces angles ne varient pas lors du travail normal, étant donné que la position relative du premier carter (29) par rapport au deuxième carter (39) ne varie pas lors de l'adaptation du deuxième châssis (14) et des outils de travail (15) qu'il supporte au relief du sol (16).

Sur la figure 2, il apparaît aussi que l'axe de rotation de l'arbre de sortie (62) du premier carter (29) et l'axe de rotation de l'arbre d'entrée (63) du deuxième carter (39) sont au moins sensiblement parallèles à l'axe géométrique de l'articulation (21) et s'étendent dans le voisinage de cet axe géométrique. Du reste, l'axe géométrique de l'articulation (21) s'étend plus haut et devant l'axe de rotation de l'arbre de sortie (62) du premier carter (29), tandis que l'axe de rotation de l'arbre d'entrée (63) du deuxième carter (39) s'étend plus bas et devant ledit axe géométrique de rotation de l'arbre de sortie (62) du premier carter (29). Enfin, la distance entre l'axe de rotation de l'arbre d'entrée (63) du deuxième carter (39) et l'axe géométrique de l'articulation (21) est sensiblement égale à la distance entre l'axe de rotation de l'arbre de sortie (62) du premier carter (29) et l'axe géométrique de ladite articulation (21).

De cette sorte, il apparaît très clairement sur la figure 4, que lors du pivotement de la première structure (17) et des organes de travail (15) qu'elle supporte par rapport à la deuxième structure (18) autour de l'axe géométrique de l'articulation (21), l'axe de rotation de l'arbre d'entrée (63) du deuxième carter (39) s'approche de l'axe de rotation de l'arbre de sortie (62) du premier carter (29). Les angles des joints universels (65) du deuxième arbre de transmission télescopique (64) diminuent ainsi lors du pivotement. De cette sorte, il n'y a aucun risque de détériorer le deuxième arbre de transmission télescopique (64) lors du pivotement autorisé par le dispositif de sécurité à déclenchement (43).

Il n'y a pas non plus de risque de détérioration du premier arbre de transmission télescopique (60), puisqu'il apparaît très clairement sur la figure 4 que, lors du pivotement, la position du premier carter (29) ne change pas par rapport à l'arbre (58) de la prise de force du tracteur (3).

La position du premier carter (29) par rapport à l'arbre (58) de la prise de force du tracteur (3) change lors de la déformation du parallélogramme permettant l'adaptation du deuxième châssis (14) et des organes de travail (15) qu'il supporte, au relief du sol (16). Comme la longueur du premier arbre de transmission téléscopique (60) peut cependant être relativement longue, les angles des joints universels (61) restent relativement faibles. Il convient d'ailleurs de noter que lors de la déformation du parallélogramme, l'arbre d'entrée (59) du premier carter (29) reste toujours au moins sensiblement parallèle à l'arbre (58) de la prise de force du tracteur (3).

Sur les figures 1 et 2, il apparaît encore que la faucheuse (1) est pourvue d'un dispositif d'allègement (66) et d'un dispositif de relevage (67).

Le dispositif d'allègement (66) comporte deux ressorts de traction (68) qui s'étendent, en vue de dessus, de part et d'autre de la bielle supérieure (8). A l'une de leur extrémité, lesdits ressorts (68) sont liés au caisson (6) du premier châssis (4). A leur autre extrémité, lesdits ressorts (68) sont liés à un levier (69) respectif fixé à la bielle supérieure (8), dans le voisinage de l'articulation (9) par l'intermédiaire de laquelle ladite bielle supérieure (8) est liée au caisson (6) du premier châssis (4). Chaque levier (69) s'étend à partir de la bielle (8) vers le bas et vers l'avant et le ressort (68) correspondant est lié à l'extrémité avant de celui-ci. Les ressorts (68) exercent ainsi, par l'intermédiaire des leviers (69), un couple sur la bielle supérieure (8), de telle sorte que le deuxième châssis (14) repose moins lourdement sur le sol (16). Le dispositif d'allègement (66) est disposé de telle manière que dans la zone de débattement autorisée par le parallélogramme déformable, la force de délestage reste relativement constante.

Le dispositif de relevage (67) comporte un vérin hydraulique (70) dont la tige (71) est liée au caisson (6) du premier châssis (4) et dont le cylindre (72) est lié à l'extrémité libre d'une chape (73). A son autre extrémité, la chape (73) est liée au caisson (6) du premier châssis (4) de manière à pouvoir tourner librement autour d'un axe géométrique confondu avec l'axe géométrique de l'articulation cylindrique (9), par l'intermédiaire de laquelle la bielle supérieure (8) est liée au premier châssis (4). La chape (73) comporte encore une butée (74). Ainsi, lorsqu'on injecte de l'huile dans le vérin (70), celui-ci se raccourcit et tire sur la chape (73) qui pivote autour de l'axe géométrique de l'articulation (9). Lorsque la butée (74) arrive en contact avec la partie inférieure de la bielle supérieure (8), elle entraîne ladite bielle supérieure (8) dans son pivotement, ce qui a pour effet de lever le deuxième châssis (14).

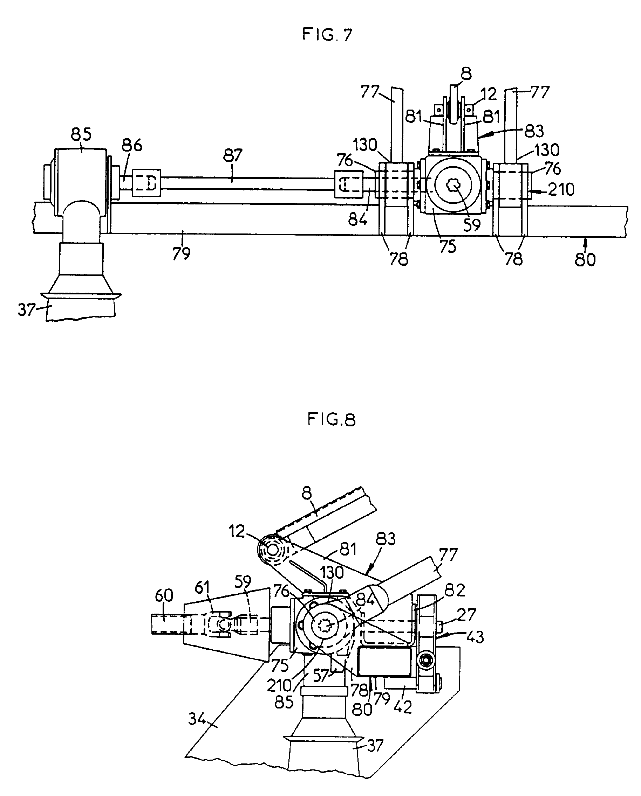

Sur les figures 7 et 8 est représenté schématiquement un autre exemple de réalisation de la présente invention qui diffère de celui qui vient d'être décrit par l'agencement du premier carter sur la deuxième structure et du deuxième arbre de transmission s'étendant entre ce premier carter et le deuxième carter.

En effet, dans cet exemple, le premier carter (75) comporte deux portées cylindriques (76) d'axe géométrique commun au moins sensiblement horizontal et dirigé au moins sensiblement perpendiculairement à la direction de travail. Ces portées cylindriques (76) servent d'une part à la liaison de l'extrémité arrière de bielles inférieures (77) similaires aux bielles inférieures (10) et de chapes (78) similaires aux chapes (31). Ces chapes (78) sont liées à une traverse tubulaire (79) similaire à la traverse tubulaire (33). Cette traverse tubulaire (79) fait partie d'une première structure (80) similaire à la première structure (17).

Sur le premier carter (75) sont fixés deux plaques (81) parallèles, s'étendant au moins sensiblement verticalement et entre les extrémités supérieures desquelles s'étend l'extrémité arrière de la bielle supérieure (8) qui y est liée au moyen de l'articulation (12). A leur partie frontale, les deux plaques (81) sont liées rigidement entre elles au moyen d'une cornière (82) similaire à la cornière (24). La deuxième structure (83) ainsi formé, similaire à la deuxième structure (18), comporte également un axe (27) faisant partie du dispositif de sécurité à déclenchement (43).

Le premier carter (75) comporte un arbre de sortie (84) dont l'axe de rotation s'étend au moins sensiblement horizontalement et au moins sensiblement perpendiculairement à la direction de travail.

La première structure (80), quant-à-elle, comporte un deuxième carter (85) similaire au deuxième carter (39), qui est fixé sur la traverse tubulaire (79). Ce deuxième carter (85) comporte un arbre d'entrée (86) dirigé vers l'arbre de sortie (84) du premier carter (75) et dont l'axe de rotation est confondu avec celui dudit arbre de sortie (84). Du reste, il apparaît aussi sur les figures 7 et 8, que l'axe de rotation commun de l'arbre de sortie (84) du premier carter (75) et de l'arbre d'entrée (86) du deuxième carter (85) est également confondu avec l'axe géométrique des portées cylindriques (76) du premier carter (75), c'est-à-dire, d'une part, avec l'axe géométrique des articulations (130) par l'intermédiaire desquelles les bielles inférieures (77) sont liées au premier carter (75) (deuxième structure (83)) et, d'autre part, avec l'axe géométrique de l'articulation (210) par l'intermédiaire de laquelle la première structure (80) est liée au premier carter (75) (deuxième structure (83)). Un deuxième arbre de transmission (87) transmet le mouvement du premier carter (75) au deuxième carter (85). L'axe de rotation de ce deuxième arbre de transmission (87) est donc également confondu avec l'axe géométrique de l'articulation (210) liant la première structure (80) à la deuxième structure (83). De cette sorte, lorsque le dispositif de sécurité (43) déclenche, et que la première structure (80) pivote par rapport à la deuxième structure (83), il ne se produira aucune contrainte dans le deuxième arbre de transmission (87).

Alors que les exemples de réalisation qui viennent d'être décrits concernent des faucheuses destinées à être attelées à l'attelage frontal d'un tracteur, on comprendra que l'invention peut également s'appliquer à une faucheuse attelée ou traînée à l'arrière d'un tracteur.

## Revendications

1. Faucheuse (1) comportant un premier châssis (4) par l'intermédiaire duquel elle est attelée à un tracteur (3), un deuxième châssis (14) supportant les organes de travail (15) et lié au premier châssis (4) au moyen de bielles (8, 10) constituant un quadrilatère déformable notamment dans une direction dirigée vers le haut pour permettre au deuxième châssis (14) et aux organes de travail (15) qu'il supporte de s'adapter au relief du sol (16), un premier carter (29) destiné à fournir aux organes de travail (15) le mouvement reçu d'une source motrice (41) au moyen d'un premier arbre de transmission téléscopique (60) à joints universels (61) et un deuxième carter (39) fixé sur le deuxième châssis (14) et destiné à transmettre aux organes de travail (15), le mouvement reçu du premier carter (29) au moyen d'un deuxième arbre de transmission télescopique (64) à joints universels (65) s'étendant, en vue de dessus, dans une direction transversale à la direction de travail, caractérisée par le fait que le deuxième châssis (14) se compose d'une première structure (17) supportant les organes de travail (15) et sur laquelle est fixé le deuxième carter (39), et d'une deuxième structure (18) à laquelle sont liées les bielles (8, 10) et sur laquelle est fixé le premier carter (29), ladite première structure (17) étant liée à ladite deuxième structure (18) au moyen d'une articulation (21) d'axe géométrique dirigé au moins sensiblement horizontalement et au moins sensiblement perpendiculairement à la direction de travail, un dispositif de sécurité à déclenchement (43) empêchant, en travail normal, le pivotement de la première structure (17) par rapport à la deuxième structure (18) autour de l'axe géométrique de ladite articulation (21) et permettant, lorsque la première structure (17) et/ou les organes de travail (15) accrochent un obstacle (56), le pivotement de ladite première structure et des organes de travail (15) par rapport à la deuxième structure (18) vers l'arrière, compte tenu du sens de travail, et que ladite direction transversale du deuxième arbre de transmission télescopique (64) à joints universels (65) est telle que dans la zone de pivotement autorisée par le dispositif de sécurité à déclenchement (43), les angles des joints universels (65) ne dépassent pas les angles limites admissibles.

2. Faucheuse selon la revendication 1, caractérisée par le fait qu'en vue suivant l'axe géométrique de l'articulation (21) liant la première structure (17) et la deuxième structure (18) du deuxième châssis (14), l'axe de rotation de l'arbre d'entrée (63) du deuxième carter (39) s'approche de l'axe de rotation de l'arbre de sortie (62) du premier carter (29), lors du pivotement de la première structure (17) par rapport à la deuxième structure (18).

3. Faucheuse selon la revendication 2, caractérisée par le fait qu'en vue suivant l'axe géométrique de l'articulation (21) liant la première structure (17) et la deuxième structure (18) du deuxième châssis (14), l'axe géométrique de ladite articulation (21) s'étend devant et plus haut que l'axe de rotation de l'arbre de sortie (62) du premier carter (29), tandis que l'axe de rotation de l'arbre d'entrée (63) du deuxième carter (39) s'étend devant et plus bas que ledit axe de rotation de l'arbre de sortie (62) du premier carter (29).

4. Faucheuse selon l'une au moins des revendications 1 à 3, caractérisée par le fait qu'en vue suivant l'axe géométrique de l'articulation (21) liant la première structure (17) et la deuxième structure (18) du deuxième châssis (14), la distance de l'axe géométrique de rotation de l'arbre de sortie (62) du premier carter (29) à l'axe géométrique de ladite articulation (21) est au moins sensiblement égale à la distance de l'axe de rotation de l'arbre d'entrée (63) du deuxième carter (39) à l'axe géométrique de ladite articulation (21).

5. Faucheuse selon l'une au moins des revendications 1 à 4, caractérisée par le fait que l'axe de rotation de l'arbre de sortie (62) du premier carter (29) et l'axe de rotation de l'arbre d'entrée (63) du deuxième carter (39) sont au moins sensiblement parallèles.

6. Faucheuse selon la revendication 5, caractérisée par le fait que l'axe de rotation de l'arbre de sortie (62) du premier carter (29) et l'axe de rotation de l'arbre d'entrée (63) du deuxième carter (39) sont au moins sensiblement parallèles à l'axe géométrique de l'articulation (21) liant la première structure (17) et la deuxième structure (18) du deuxième châssis (14).

7. Faucheuse selon l'une au moins des revendications 1 à 6, caractérisée par le fait qu'en vue suivant l'axe géométrique de l'articulation (21) liant la première structure (17) et la deuxième structure (18) du deuxième châssis (14), l'axe de rotation de l'arbre d'entrée (63) du deuxième carter (39) s'étend dans le voisinage de l'axe géométrique de ladite articulation (21).

8. Faucheuse selon la revendication 7, caractérisée par le fait qu'en vue suivant l'axe géométrique de l'articulation (21) liant la première structure (17) et la deuxième structure (18) du deuxième châssis (14), l'axe de rotation de l'arbre de sortie (62) du premier carter (29) s'étend également dans le voisinage de l'axe géométrique de ladite articulation (21).

9. Faucheuse selon l'une des revendications 7 ou 8, caractérisée par le fait qu'en vue suivant l'axe géométrique de l'articulation (21) liant la première structure (17) et la deuxième structure (18) du deuxième châssis (14), l'axe de rotation de l'arbre de sortie (62) du premier carter (29) et l'axe de rotation de l'arbre d'entrée (63) du deuxième carter (39) sont confondus avec l'axe géométrique de ladite articulation (21).

10. Faucheuse (1) comportant un premier châssis (4) par l'intermédiaire duquel elle est attelée à un tracteur (3), un deuxième châssis (14) supportant les organes de travail (15) et lié au premier châssis (4) au moyen de bielles (8, 77) constituant un quadrilatère déformable notamment dans une direction dirigée vers le haut pour permettre au deuxième châssis (14) et aux organes de travail (15) qu'il supporte de s'adapter au relief du sol (16), un premier carter (75) destiné à fournir aux organes de travail (15) le mouvement reçu d'une source motrice (41) au moyen d'un premier arbre de transmission télescopique (60) à joints universels (61) et un deuxième carter (85) fixé sur le deuxième châssis (14) et destiné à transmettre aux organes de travail (15) le mouvement reçu du premier carter (75) au moyen d'un deuxième arbre de transmission (87) s'étendant, en vue de dessus, dans une direction transversale à la direction de travail, caractérisée par le fait que le deuxième châssis (14) se compose d'une première structure (80) supportant les organes de travail (15) et sur laquelle est fixé le deuxième carter (85), et d'une deuxième structure (83) à laquelle sont liées les bielles (8, 77) et sur laquelle est fixé le premier carter (75), ladite première structure (80) étant liée à ladite deuxième structure (83) au moyen d'une articulation (210) d'axe géométrique dirigé au moins sensiblement horizontalement et au moins sensiblement perpendiculairement à la direction de travail, un dispositif de sécurité à déclenchement (43) empêchant, en travail normal, le pivotement de la première structure (80) par rapport à la deuxième structure (83) autour de l'axe géométrique de ladite articulation (210) et permettant, lorsque la première structure (80) et/ou les organes de travail (15) accrochent un obstacle (56), le pivotement de ladite première structure (80) et des organes de travail (15) par rapport à la deuxième structure (83), vers l'arrière, compte tenu du sens de travail, et que l'axe de rotation du deuxième arbre de transmission (87) soit confondu avec l'axe géométrique de l'articulation (210) liant la première structure (80) et la deuxième structure (83) du deuxième châssis (14).

11. Faucheuse selon l'une au moins des revendications 1 à 10, caractérisée par le fait que le quadrilatère déformable est au moins sensiblement un parallélogramme déformable.

12. Faucheuse selon l'une au moins des revendications 1 à 11, caractérisée par le fait que le premier carter (29, 75) s'étend dans la partie médiane de la faucheuse (1) vue suivant la direction de travail.

13. Faucheuse selon l'une au moins des revendications 1 à 12, caractérisée par le fait que le premier carter (29, 75) comporte un arbre d'entrée (59) s'étendant au moins sensiblement parallèlement à la direction de travail.

14. Faucheuse selon l'une au moins des revendications 1 à 13, caractérisée par le fait que le deuxième carter (39, 85) s'étend dans le voisinage de l'une des extrémités du deuxième châssis (14).

15. Faucheuse selon l'une au moins des revendications 1 à 14, caractérisée par le fait que le dispositif de sécurité à déclenchement (43) s'étend à la partie frontale du deuxième châssis (14).

16. Faucheuse selon l'une au moins des revendications 1 à 15, caractérisée par le fait que le dispositif de sécurité à déclenchement (43) s'étend dans la partie médiane de la faucheuse (1) vue suivant la direction de travail.

17. Faucheuse selon l'une au moins des revendications 1 à 16, caractérisée par le fait que le dispositif de sécurité à déclenchement (43) comporte :
- deux axes (27, 42) s'étendant vers l'avant au moins sensiblement parallèlement à la direction de travail, l'un (42) desdits axes étant lié à la première structure (17, 80) et l'autre (27) desdits axes étant lié à la deuxième structure (18, 83), les deux axes s'étendant l'un au-dessus de l'autre ;
- deux brides (44, 45) comportant chacune un logement (441, 442, 451, 452) entourant partiellement chacun des deux axes (27, 42), de telle sorte que les deux axes (27, 42) s'étendent entre lesdites brides (44, 45) ; et
- un dispositif élastique (46) serrant les deux brides (44, 45) sur les deux axes (27, 42).

18. Faucheuse selon la revendication 17, caractérisée par le fait que l'axe supérieur (27) est lié à la deuxième structure (18, 83) et l'axe inférieur (42) à la première structure (17, 80).

19. Faucheuse selon la revendication 17 ou 18, caractérisée par le fait que les logements (441, 442, 451, 452) présentent une forme adaptée pour collaborer avec la forme des axes (27, 42).

20. Faucheuse selon l'une au moins des revendications 17 à 19, caractérisée par le fait que chaque logement (441, 442, 451, 452) entoure l'axe (27, 42) correspondant sur sensiblement 180°.

21. Faucheuse selon l'une au moins des revendications 17 à 20, caractérisée par le fait que le dispositif élastique (46) s'étend entre les deux axes (27, 42).

22. Faucheuse selon la revendication 21, caractérisée par le fait que le dispositif élastique (46) s'étend plus près de l'un (42) des axes que de l'autre axe (27).

23. Faucheuse selon la revendication 22, caractérisée par le fait que le dispositif élastique (46) s'étend plus près de l'axe inférieur (42).

24. Faucheuse selon l'une des revendications 22 ou 23, caractérisée par le fait que les brides (44, 45) sont prolongées au-delà de l'axe (27) le plus éloigné du dispositif élastique (46), d'une distance telle qu'en fin de la zone de pivotement autorisée, ledit axe (27) s'étende toujours entre lesdites brides (44, 45).

25. Faucheuse selon l'une au moins des revendications 17 à 24, caractérisée par le fait que le dispositif élastique (46) comporte :
- une tige (47) s'étendant au moins sensiblement perpendiculairement au plan contenant les deux axes (27, 42) et dont l'une des extrémités traverse la première bride (44) et est liée à la seconde bride (45) ; et
- un organe élastique (48) serré entre ladite première bride (44) et un écrou (55) vissé sur l'autre extrémité de ladite tige (47).

26. Faucheuse selon la revendication 25, caractérisée par le fait que l'organe élastique (48) est constitué par un empilage de rondelles élastiques (53).

27. Faucheuse selon l'une au moins des revendications 1 à 26, caractérisée par le fait qu'un organe de limitation (57) limite le pivotement de la première structure (17, 80) par rapport à la deuxième structure (18, 83) autorisé par le dispositif de sécurité à déclenchement (43).

28. Faucheuse selon l'une au moins des revendications 1 à 27, caractérisée par le fait que l'axe géométrique de l'articulation (21, 210) liant la première structure (17, 80) et la deuxième structure (18, 83) du deuxième châssis (14) s'étend sensiblement à la verticale de la partie frontale des organes de travail (15).

29. Faucheuse selon l'une au moins des revendications 1 à 28, caractérisée par le fait que l'axe géométrique de l'articulation (21, 210) liant la première structure (17, 80) et la deuxième structure (18, 83) du deuxième châssis (14) est confondu avec l'axe géométrique de l'articulation (12) liant la ou les bielles supérieures (8) au deuxième châssis (14) ou avec l'axe géométrique de l'articulation (13, 130) liant la ou les bielles inférieures (10, 77) au deuxième châssis (14).

30. Faucheuse selon l'une au moins des revendications 1 à 29, caractérisée par le fait que les bielles (8, 10, 77) liant le deuxième châssis (14) au premier châssis (4), sont liées à leur extrémité frontale au premier châssis (4) d'où elles s'étendent vers l'arrière et vers le bas.

31. Faucheuse selon l'une au moins des revendications 1 à 30, caractérisée par le fait que le premier châssis (4) est adapté pour être attelé à l'attelage frontal (2) d'un tracteur (3).

## Patentansprüche

1. Mähmaschine (1), die einen ersten Rahmen (4) hat, durch den sie an eine Zugmaschine (3) gekuppelt wird, die einen zweiten Rahmen (14) hat, der die Arbeitselemente (15) trägt und der mit dem ersten Rahmen (4) durch Stangen (8, 10) verbunden ist, wobei die Stangen (8,10) ein besonders nach oben deformierbares Gelenkviereck bilden, das dem zweiten Rahmen (14) und den darauf befindlichen Arbeitselementen (15) gestattet, sich dem Bodenrelief (16) anzupassen, die ein erstes Gehäuse (29) hat, das dazu dient, die von einer Antriebsguelle (41) mittels einer ersten teleskopischen Antriebswelle (60) mit Kardangelenken (61) erhaltene Antriebskraft auf die Arbeitselemente (15) zu übertragen, und die ein zweites Gehäuse (39) hat, das auf dem zweiten Rahmen (14) befestigt ist und dazu dient, die von dem ersten Gehäuse (29) mittels einer zweiten teleskopischen Antriebswelle (64) mit Kardangelenken (65) erhaltene Antriebskraft auf die Arbeitselemente (15) zu übertragen, wobei die zweite Antriebswelle (64) in Draufsicht in Querrichtung gegenüber der Arbeitsrichtung verläuft,
dadurch **gekennzeichnet**,
daß der zweite Rahmen (14) aus einem ersten Aufbau (17) besteht, auf dem sich die Arbeitselemente (15) befinden und an dem das zweite Gehäuse (39) befestigt ist und aus einem zweiten Aufbau (18), mit dem die Stangen (8,10) verbunden sind und an dem das erste Gehäuse (29) befestigt ist, wobei der erste Aufbau (17) mit dem zweiten Aufbau (18) durch ein Gelenk (21) verbunden ist, dessen geometrische Achse wenigstens im wesentlichen horizontal und wenigstens im wesentlichen senkrecht zur Arbeitsrichtung verläuft, daß eine selbstauslösende Sicherheitsvorrichtung (43) vorhanden ist, die im Normalbetrieb das Ausschwenken des ersten Aufbaues (17) gegenüber dem zweiten Aufbau (18) um die geometrische Achse des Gelenks (21) verhindert, und welche das Ausschwenken des ersten Aufbaus (17) und der Arbeitselemente (15) gegenüber dem zweiten Aufbau (18) nach rückwärts in Bezug zur Arbeitsrichtung erlaubt, wenn der erste Aufbau (17) und/oder die Arbeitselemente (15) gegen ein Hindernis (56) stoßen, und daß die Querrichtung der zweiten teleskopischen Antriebswelle (64) mit Kardangelenken (65) so verläuft, daß in dem von der selbstauslösenden Sicherheitsvorrichtung (43) zugelassenen Schwenkbereich, die Winkel der Kardangelenke (65) die zulässigen Grenzwinkel nicht überschreiten.

2. Mähmaschine nach Anspruch 1,
dadurch **gekennzeichnet**,
daß mit Blick auf die geometrische Achse des Gelenks (21), das den ersten Aufbau (17) mit dem zweiten Aufbau (18) des zweiten Rahmens (14) verbindet, die Rotationsachse der Eingangswelle (63) des zweiten Gehäuses (39) sich der Rotationsachse der Ausgangswelle (62) des ersten Gehäuses (29) nähert, während der erste Aufbau (17) gegenüber dem zweiten Aufbau (18) ausschwenkt.

3. Mähmaschine nach Anspruch 2,
dadurch **gekennzeichnet**,
daß mit Blick auf die geometrische Achse des Gelenks (21), das den ersten Aufbau (17) mit dem zweiten Aufbau (18) des zweiten Rahmens (14) verbindet, die geometrische Achse des Gelenks (21) vor und über der Rotationsachse der Ausgangswelle (62) des ersten Gehäuses (29) verläuft, während die Rotationsachse der Eingangswelle (63) des zweiten Gehäuses (39) vor und unter der Rotationsachse der Ausgangswelle (62) des ersten Gehäuses (29) verläuft.

4. Mähmaschine nach zumindest einem der Ansprüche 1 bis 3,
dadurch **gekennzeichnet**,
daß mit Blick auf die geometrische Achse des Gelenks (21), das den ersten Aufbau (17) mit dem zweiten Aufbau (18) des zweiten Rahmens (14) verbindet, der Abstand der Rotationsachse der Ausgangswelle (62) des ersten Gehäuses (29) zur geometrischen Achse des Gelenks (21) mindestens im wesentlichen gleich dem Abstand der Rotationsachse der Eingangswelle (63) des zweiten Gehäuses (39) zur geometrischen Achse des Gelenks (21) ist.

5. Mähmaschine nach zumindest einem der Ansprüche 1 bis 4,
dadurch **gekennzeichnet**,
daß die Rotationsachse der Ausgangswelle (62) des ersten Gehäuses (29) und die Rotationsachse der Eingangswelle (63) des zweiten Gehäuses (39) wenigstens im wesentlichen parallel verlaufen.

6. Mähmaschine nach Anspruch 5,
dadurch **gekennzeichnet,**
daß die Rotationsachse der Ausgangswelle (62) des ersten Gehäuses (29) und die Rotationsachse der Eingangswelle (63) des zweiten Gehäuses (39) wenigstens im wesentlichen parallel zur geometrischen Achse des Gelenks (21) verlaufen, das den ersten Aufbau (17) mit dem zweiten Aufbau (18) des zweiten Rahmens (14) verbindet.

7. Mähmaschine nach zumindest einem der Ansprüche 1 bis 6,
dadurch **gekennzeichnet**,
daß mit Blick auf die geometrische Achse des Gelenks (21), das den ersten Aufbau (17) mit dem zweiten Aufbau (18) des zweiten Rahmens (14) verbindet, die Rotationsachse der Eingangswelle (63) des zweiten Gehäuses (39) in der nähe der geometrischen Achse des Gelenks (21) verläuft.

8. Mähmaschine nach Anspruch 7,
dadurch **gekennzeichnet**,
daß mit Blick auf die geometrische Achse des Gelenks (21), das den ersten Aufbau (17) mit dem zweiten Aufbau (18) des zweiten Rahmens (14) verbindet, die Rotationsachse der Ausgangswelle (62) des ersten Gehäuses (29) auch in der Nähe der geometrische Achse des Gelenks (21) verläuft.

9. Mähmaschine nach einem der Ansprüche 7 oder 8,
dadurch **gekennzeichnet**,
daß mit Blick auf die geometrische Achse des Gelenks (21), das den ersten Aufbau (17) mit dem zweiten Aufbau (18) des zweiten Rahmens (14) verbindet, die Rotationsachse der Ausgangswelle (62) des ersten Gehäuses (29) und die Rotationsachse der Eingangswelle (63) des zweiten Gehäuses (39) mit der geometrischen Achse des Gelenks (21) zusammenfallen.

10. Mähmaschine (1), die einen ersten Rahmen (4) hat, durch den sie an eine Zugmaschine (3) gekuppelt wird, die einen zweiten Rahmen (14) hat, der die Arbeitselemente (15) trägt und der mit dem ersten Rahmen (4) durch Stangen (8, 77) verbunden ist, wobei die Stangen (8,77) ein besonders nach oben deformierbares Gelenkviereck bilden, das dem zweiten Rahmen (14) und den darauf befindlichen Arbeitselementen (15) gestattet, sich dem Bodenrelief (16) anzupassen, die ein erstes Gehäuse (75) hat, das dazu dient,die von einer Antriebsguelle (41) mittels einer teleskopischen Antriebswelle (60) mit Kardangelenken (61) erhalten Antriebskraft auf die Arbeitselemente (15) zu übertragen, und die ein zweites Gehäuse (85) hat, das auf dem zweiten Rahmen (14) befestigt ist und dazu dient, die von dem ersten Gehäuse (75) mittels einer zweiten Antriebswelle (87) erhaltene Antriebskraft auf die Arbeitselemente (15) zu übertragen, wobei diese zweite Antriebswelle (87) in Draufsicht quer zur Arbeitsrichtung verläuft,
dadurch **gekennzeichnet**,
daß der zweite Rahmen (14) aus einem ersten Aufbau (80) besteht, auf dem sich die Arbeitselemente (15) befinden, und an dem das zweite Gehäuse (85) befestigt ist, und aus einem zweiten Aufbau (83), mit dem die Stangen (8, 77) verbunden sind und an dem das ersten Gehäuse (75) befestigt ist, wobei der erste Aufbau (80) mit dem zweiten Aufbau (83) durch ein Gelenk (210) verbunden ist, dessen geometrische Achse wenigstens im wesentlichen horizontal und wenigstens im wesentlichen senkrecht zur Arbeitsrichtung verläuft, daß weiterhin eine selbstauslösende Sicherheitsvorrichtung (43) vorgesehen ist, die im Normabetrieb das Ausschwenken des ersten Aufbaus (80) gegenüber dem zweiten Aufbau (83) um die geometrische Achse des Gelenks (210) verhindert, und welche das Ausschwenken des ersten Aufbaues (80) und der Arbeitselemente (15) gegenüber dem zweiten Aufbau (83) nach rückwärts in Bezug zur Arbeitsrichtung erlaubt, wenn der erste Aufbau (80) und/oder die Arbeitselemente (15) gegen ein Hindernis stoßen, und daß die Rotationsachse der zweiten Antriebswelle (87) mit der geometrischen Achse des Gelenks (210) zusammenfällt, das den ersten Aufbau (80) mit dem zweiten Aufbau (83) des zweiten Rahmens (14) verbindet.

11. Mähmaschine nach zumindest einem der Ansprüche 1 bis 10,
dadurch **gekennzeichnet**,
daß das deformierbare Gelenkviereck wenigstens im wesentlichen ein deformierbares Parallelogramm ist.

12. Mähmaschine nach zumindest einem der Ansprüche 1 bis 11,
dadurch **gekennzeichnet**,
daß das erste Gehäuse (29,75) im Mittelteil der Mähmaschine (1) , in der Arbeitsrichtung gesehen, angeordnet ist.

13. Mähmaschine nach zumindest einem der Ansprüche 1 bis 12,
dadurch **gekennzeichnet**,
daß das erste Gehäuse (29,75) eine Eingangswelle (59) hat, die wenigstens im wesentlichen parallel zur Arbeitsrichtung verläuft.

14. Mähmaschine nach zumindest einem der Ansprüche 1 bis 13,
dadurch **gekennzeichnet**,
daß das zweite Gehäuse (39,85) sich in der Nähe eines der Enden des zweiten Rahmens (14) erstreckt.

15. Mähmaschine nach zumindest einem der Ansprüche 1 bis 14,
dadurch **gekennzeichnet**,
daß sich die selbstauslösende Sicherheitsvorrichtung (43) am Vorderteil des zweiten Rahmens (14) erstreckt.

16. Mähmaschine nach zumindest einem der Ansprüche 1 bis 15,
dadurch **gekennzeichnet**,
daß sich die selbtauslösende Sicherheitsvorrichtung (43) im Mittelteil der Mähmaschine (1) in der Arbeitsrichtung gesehen, erstreckt.

17. Mähmaschine nach zumindest einem der Ansprüche 1 bis 16,
dadurch **gekennzeichnet**,
daß die selbstauslösende Sicherheitsvorrichtung (43) folgende Teile hat:
- zwei Achsen (27,42), die sich nach vorne wenigstens im wesentlichen parallel zur Arbeitsrichtung erstrecken, wobei die eine (42) der oben genannten Achsen mit dem ersten Aufbau (17,80) und die andere (27) der oben genannten Achsen mit dem zweiten Aufbau (18,83) verbunden sind und wobei eine der Achsen über der anderen verläuft.
- zwei Bügel (44,45), von denen jeder ein Lager (441,442, 451,452) hat, das jede der zwei Achsen (27,42) teilweise umgibt, so daß sich die zwei Achsen (27,42) zwischen den Bügel (44,45) erstrecken; und
- eine elastische Vorrichtung (46), die die zwei Bügel (44,45) gegen die zwei Achsen (27,42) preßt.

18. Mähmaschine nach Anspruch 17,
dadurch **gekennzeichnet,**
daß die obere Achse (27) mit dem zweiten Aufbau (18,83) und die untere Achse (42) mit dem ersten Aufbau (17,80) verbunden sind.

19. Mähmaschine nach Anspruch 17 oder 18,
dadurch **gekennzeichnet**,
daß die Lager (441,442,451,452) eine Form aufweisen, welche für eine Zusammenarbeit mit der Form der Achsen (27,42) ausgebildet ist.

20. Mähmaschine nach zumindest einem der Ansprüche 17 bis 19,
dadurch **gekennzeichnet**,
daß jedes Lager (441,442,451,452) die Achse (27,42) im wesentlichen um 180° umgibt.

21. Mähmaschine nach zumindest einem der Ansprüche 17 bis 20,
dadurch **gekennzeichnet**,
daß sich die elastische Vorrichtung (46) zwischen den zwei Achsen (27,42) erstreckt.

22. Mähmaschine nach Anspruch 21,
dadurch **gekennzeichnet**,
daß sich die elastische Vorrichtung (46) näher an der einen (42) der Achsen als an der anderen Achse (27) erstreckt.

23. Mähmaschine nach Anspruch 22 ,
dadurch **gekennzeichnet**,
daß sich die elastische Vorrichtung (46) näher an der unteren Achse (42) erstreckt.

24. Mähmaschine nach einem der Ansprüche 22 oder 23,
dadurch **gekennzeichnet**,
daß die Bügel (44,45) über die von der elastischen Vorrichtung (46) am weitesten entfernte Achse (27) hinausragen, und zwar um so viel, daß die Achse (27) am Ende des zulässigen Schwenkbereichs sich immer noch zwischen den Bügeln (44,45) erstreckt.

25. Mähmaschine nach zumindest einem der Ansprüche 17 bis 24,
dadurch **gekennzeichnet**,
daß die elastische Vorrichtung (46) folgende Teile hat:
- einen Schaft (47), der sich wenigstens im wesentlichen senkrecht zu einer Ebene erstreckt, in der die zwei Achsen (27,42) verlaufen, und dessen ein Ende den ersten Bügel (44) durchquert und mit dem zweiten Bügel (45) verbunden ist, und
- ein elastisches Element (48), das zwischen dem ersten Bügel (44) und einer auf dem anderen Ende des Schaftes (47) aufgeschraubten Mütter (55) gepreßt ist.

26. Mähmaschine nach Anspruch 25,
dadurch **gekennzeichnet**,
daß das elastische Element (48) aus einem Stapel von elastischen Scheiben (53) besteht.

27. Mähmaschine nach zumindest einem der Ansprüche 1 bis 26,
dadurch **gekennzeichnet**,
daß eine Begrenzungseinrichtung (57) das durch die selbstauslösende Sicherheitsvorrichtung (43) zugelassene Ausschwenken des ersten Aufbaus (17,80) gegenüber dem zweiten Aufbau (18,83) begrenzt.

28. Mähmaschine nach zumindest einem der Ansprüche 1 bis 27,
dadurch **gekennzeichnet**,
daß sich die geometrische Achse des Gelenks (21,210), das den ersten Aufbau (17,80) mit dem zweiten Aufbau (18,83) des zweiten Rahmens (14) verbindet, im wesentlichen in der Vertikalen zum Vorderteil der Arbeitselemente (15) erstreckt.

29. Mähmaschine nach zumindest einem der Ansprüche 1 bis 28,
dadurch **gekennzeichnet**,
daß die geometrische Achse des Gelenks (21,210), das den ersten Aufbau (17,80) mit dem zweiten Aufbau (18,83) des zweiten Rahmens (14) verbindet, mit der geometrische Achse des Gelenks (12), das die obere Stange oder die oberen Stangen (8) mit dem zweiten Rahmen (14) oder mit der geometrischen Achse des Gelenks (13,130), das die untere Stange oder die unteren Stangen (10,77) mit dem zweiten Rahmen (14) verbindet, zusammenfällt.

30. Mähmaschine nach zumindest einem der Ansprüche 1 bis 29,
dadurch **gekennzeichnet**,
daß die Stangen (8,10,77), die den zweiten Rahmen (14) mit dem ersten Rahmen (4) verbinden, an ihrem vorderen Ende mit dem ersten Rahmen (4) verbunden sind, von wo aus sie sich nach hinten und nach unten erstrecken.

31. Mähmaschine nach zumindest einem der Ansprüche 1 bis 30,
dadurch **gekennzeichnet**,
daß der erste Rahmen (4) so konzipiert ist, an der vorderen Kupplung (2) einer Zugmaschine (3) angekuppelt zu werden.

## Claims

1. A mower (1) comprising a first frame (4) by means of which the mower is attached to a tractor (3), a second frame (14) supporting the working tools (15) and connected to the first frame (4) by means of connecting rods (8, 10) forming a quadrilateral which is deformable particularly in an upward direction in order to allow the second frame (14) and the working tools (15) which it supports to adapt to the shape of the ground (16), a first housing (29) intended to supply the working tools (15) with the movement received from a motor source (41) by means of a first telescopic transmission shaft (60) with universal joints (61) and a second housing (39) fixed onto the second frame (14) and intended to transmit to the working tools (15) the movement received from the first housing (29) by means of a second telescopic transmission shaft (64) with universal joints (65) extending, when seen from above, in a direction transversal to the direction of work, characterised in that the second frame (14) is made up of a first structure (17) supporting the working tools (15) and on which is fixed the second housing (39), and of a second structure (18) to which are connected the connecting rods (8, 10) and on which is fixed the first housing (29), the said first structure (17) being connected to the said second structure (18) by means of a pivot (21) with a geometric axis pointed at least substantially horizontal and at least substantially perpendicular to the direction of work, a security clamp (43) preventing, during normal work, the pivoting of the first structure (17) in relation to the second structure (18) around the geometric axis of the said pivot (21) and permitting, when the first structure (17) and/or the working tools (15) meet an obstacle (56), the pivoting of the said first structure and of the working tools (15) in relation to the second structure (18) towards the rear, taking account of the direction of work, and that the said transversal direction of the second telescopic transmission shaft (64) with universal joints (65) is such that in the area of pivoting allowed by the security clamp (43), the angles of the universal joints (65) do not exceed the admissible angle limits.

2. A mower in accordance with claim 1, characterised in that when viewed along the geometric axis of the pivot (21) connecting the first structure (17) and the second structure (18) of the second frame (14), the axis of rotation of the entry shaft (63) of the second housing (39) approaches the axis of rotation of the exit shaft (62) of the first housing (29), when the first structure (17) pivots in relation to the second structure (18).

3. A mower in accordance with claim 2, characterised in that when viewed along the geometric axis of the pivot (21) connecting the first structure (17) and the second structure (18) of the second frame (14), the geometric axis of the said pivot (21) extends in front of and higher than the axis of rotation of the exit shaft (62) of the first housing (29), while the axis of rotation of the entry shaft (63) of the second housing (39) extends in front of and lower than the said axis of rotation of the exit shaft (62) of the first housing (29).

4. A mower in accordance with at least one of claims 1 to 3, characterised in that when viewed along the geometric axis of the pivot (21) connecting the first structure (17) and the second structure (18) of the second frame (14), the distance from the geometric axis of rotation of the exit shaft (62) of the first housing (29) to the geometric axis of the said pivot (21) is at least substantially equal to the distance from the axis of rotation of the entry shaft (63) of the second housing (39) to the geometric axis of the said pivot (21).

5. A mower in accordance with at least one of claims 1 to 4, characterised in that the axis of rotation of the exit shaft (62) of the first housing (29) and the axis of rotation of the entry shaft (63) of the second housing (39) are at least substantially parallel.

6. A mower in accordance with claim 5, characterised in that the axis of rotation of the exit shaft (62) of the first housing (29) and the axis of rotation of the entry shaft (63) of the second housing (39) are at least substantially parallel to the geometric axis of the pivot (21) connecting the first structure (17) and the second structure (18) of the second frame (14).

7. A mower in accordance with at least one of claims 1 to 6, characterised in that when viewed along the geometric axis of the pivot (21) connecting the first structure (17) and the second structure (18) of the second frame (14), the axis of rotation of the entry shaft (63) of the second housing (39) extends in the vicinity of the geometric axis of the said pivot (21).

8. A mower in accordance with claim 7, characterised in that when viewed along the geometric axis of the pivot (21) connecting the first structure (17) and the second structure (18) of the second frame (14), the axis of rotation of the exit shaft (62) of the first housing (29) extends also in the vicinity of the geometric axis of the said pivot (21).

9. A mower in accordance with one of claims 7 or 8, characterised in that when viewed along the geometric axis of the pivot (21) connecting the first structure (17) and the second structure (18) of the second frame (14), the axis of rotation of the exit shaft (62) of the first housing (29) and the axis of rotation of the entry shaft (63) of the second housing (39) are merged with the geometric axis of the said pivot (21).

10. A mower (1) comprising a first frame (4) by means of which the mower is attached to a tractor (3), a second frame (14) supporting the working tools (15) and connected to the first frame (4) by means of connecting rods (8, 77) forming a quadrilateral which is deformable particularly in an upwardly pointed direction in order to allow the second frame (14) and the working tools (15) which it supports to adapt to the shape of the ground (16), a first housing (75) intended to supply the working tools (15) with the movement received from a motor source (41) by means of a first telescopic transmission shaft (60) with universal joints (61) and a second housing (85) fixed onto the second frame (14) and intended to transmit to the working tools (15) the movement received from the first housing (75) by means of a second transmission shaft (87) extending, when seen from above, in a direction transversal to the direction of work, characterised in that the second frame (14) is made up of a first structure (80) supporting the working tools (15) and on which is fixed the second housing (85), and of a second structure (83) to which are connected the connecting rods (8, 77) and on which is fixed the first housing (75), the said first structure (80) being connected to the said second structure (83) by means of a pivot (210) with a geometric axis pointed at least substantially horizontal and at least substantially perpendicular to the direction of work, a security clamp (43) preventing, during normal work, the pivoting of the first structure (80) in relation to the second structure (83) around the geometric axis of the said pivot (210) and permitting, when the first structure (80) and/or the working tools (15) meet an obstacle (56), the pivoting of the said first structure (80) and of the working tools (15) in relation to the second structure (83) towards the rear, taking account of the direction of work, and that the axis of rotation of the second transmission shaft (87) is merged with the geometric axis of the pivot (210) connecting the first structure (80) and the second structure (83) of the second frame (14).

11. A mower in accordance with at least one of claims 1 to 10, characterised in that the deformable quadrilateral is at least substantially a deformable parallelogram.

12. A mower in accordance with at least one of the claims 1 to 11, characterised in that the first housing (29, 75) extends in the middle part of the mower (1) when seen following the direction of work.

13. A mower in accordance with at least one of claims 1 to 12, characterised in that the first housing (29, 75) has an entry shaft (59) extending at least substantially parallel to the direction of work.

14. A mower in accordance with at least one of claims 1 to 13, characterised in that the second housing (39, 85) extends in the vicinity of one end of the second frame (14).

15. A mower in accordance with at least one of claims 1 to 14, characterised in that the security clamp (43) extends to the front part of the second frame (14).

16. A mower in accordance with at least one of claims 1 to 15, characterised in that the security clamp (43) extends in the middle part of the mower (1) when seen following the direction of work.

17. A mower in accordance with at least one of claims 1 to 16, characterised in that the security clamp (43) comprises:
- two axes (27, 42) extending towards the front at least substantially parallel to the direction of work, one (42) of the said axes being connected to the first structure (17, 80) and the other (27) of the said axes being connected to the second structure (18, 83), the two axes extending one above the other;
- two flanges (44, 45) each having a lodging (441, 442, 451, 452) partially surrounding each of the two axes (27, 42), in such a way that the two axes (27, 42) extend between the said two flanges (44, 45); and
- an elastic device (46) clamping the two flanges (44, 45) onto the two axes (27, 42).

18. A mower in accordance with claim 17, characterised in that the upper axis (27) is connected to the second structure (18, 83) and the lower axis (42) to the first structure (17, 80).

19. A mower in accordance with claim 17 or 18, characterised in that the lodgings (441, 442, 451, 452) have a shape adapted so as to work with the shape of the axes (27, 42).

20. A mower in accordance with at least one of claims 17 to 19, characterised in that each lodging (441, 442, 451, 452) surrounds the corresponding axis (27, 42) over more or less 180 degrees.

21. A mower in accordance with at least one of claims 17 to 20, characterised in that the elastic device (46) extends between the two axes (27, 42).

22. A mower in accordance with claim 21, characterised in that the elastic device (46) extends closer to one (42) of the axes than to the other (27).

23. A mower in accordance with claim 22, characterised in that the elastic device (46) extends closer to the lower axis (42).

24. a mower in accordance with one of claims 22 or 23, characterised in that the flanges (44, 45) are prolonged beyond the axis (27) furthest from the elastic device (46), to a distance such that at the end of the permitted pivoting zone, the said axis (27) still extends between the said flanges (44, 45).

25. A mower in accordance with at least one of claims 17 to 24, characterised in that the elastic device (46) comprises:
- a shank (47) extending at least substantially perpendicular to the plane containing the two axes (27, 42) and one of whose ends goes through the first flange (44) and is connected to the second flange (45); and
- an elastic element (48) clamped between the said first flange (44) and a nut (55) screwed on to the other end of the said shank (47).

26. A mower in accordance with claim 25, characterised in that the elastic element (48) is made up of a pile of elastic washers (53).

27. A mower in accordance with at least one of claims 1 to 26, characterised in that a limiting member (57) limits the pivoting of the first structure (17, 80) in relation to the second structure (18, 83) permitted by the security clamp (43).

28. A mower in accordance with at least one of claims 1 to 27, characterised in that the geometric axis of the pivot (21, 210) connecting the first structure (17, 80) and the second structure (18, 83) of the second frame (14) extends substantially vertically above the front part of the working tools (15).

29. A mower in accordance with at least one of claims 1 to 28, characterised in that the geometric axis of the pivot (21, 210) connecting the first structure (17, 80) and the second structure (18, 83) of the second frame (14) is merged with the geometric axis of the pivot (12) connecting the upper connecting rod(s)(8) to the second frame (14) or with the geometric axis of the pivot (13, 130) connecting the lower connecting rod(s)(10, 77) to the second frame (14).

30. A mower in accordance with at least one of claims 1 to 29, characterised in that the connecting rods (8, 10, 77) connecting the second frame (14) to the first frame (4) are connected at their front end to the first frame (4) from where they extend backwards and downwards.

31. A mower in accordance with at least one of claims 1 to 30, characterised in that the first frame (4) is adapted to be connected to the front coupling (2) of a tractor (3).
